# EUROPÄISCHE PATENTSCHRIFT

(11) **EP 3 712 003 B1**
(45) Veröffentlichungstag und Bekanntmachung des Hinweises auf die Patenterteilung: **25.01.2023**
(21) Anmeldenummer: 20162799.9
(22) Anmeldetag: 12.03.2020
(51) Int. Cl.: B60L 9/00, B60L 1/00, H02G 11/00

(54) **STROMVERSORGUNGSSYSTEM EINES FLOTTENFAHRZEUGS**
POWER SUPPLY SYSTEM FOR A FLEET VEHICLE
SYSTÈME D'APPROVISIONNEMENT EN ÉNERGIE D'UN VÉHICULE DE FLOTTE

(30) Priorität: 18.03.2019 DE 102019203653
(43) Veröffentlichungstag der Anmeldung: 23.09.2020
(73) Patentinhaber: Deere & Company, Moline, IL 61265 (US)
(72) Erfinder: Pfaffmann, Simon, 68163 Mannheim (DE); Tarasinski, Nicolai, 68163 Mannheim (DE); Kegel, Volker, 68163 Mannheim (DE); Daubermann, Julian, 68163 Mannheim (DE); De Moraes Boos, Felipe, 68163 Mannheim (DE)
(74) Vertreter: Dehnhardt, Florian Christopher

(56) Entgegenhaltungen:
- DE-A1-102017 217 481
- GB-A- 801 770
- US-A1- 2014 027 228

## Beschreibung

Die Erfindung betrifft ein Stromversorgungssystem eines Flottenfahrzeugs, umfassend ein kabelgebunden betreibbares Zugfahrzeug sowie ein daran angebrachtes landwirtschaftliches Heckanbaugerät mit Arbeitswerkzeugen zur Ausführung einer Bodenbearbeitungsfunktion.

Gängige Konzepte zur Versorgung von Fahrzeugen mit elektrischer Energie sehen den Einsatz wiederaufladbarer Fahrzeugbatterien vor. Aufgrund der vor allem im Land- bzw. Baumaschinenbereich geforderten hohen Leistungsdichten werden auch alternative Konzepte verfolgt, bei denen der elektrische Strom kabelgebunden an das zu versorgende Nutzfahrzeug übertragen wird.

So geht in diesem Zusammenhang aus der US 2014/027228 A1 ein selbstfahrender Kabelrelaiswagen hervor, der eine Stromübertragungseinheit aufweist, die ausgebildet ist, elektrische Leistung einerseits zwischen einer Stromversorgungseinheit und dem Kabelrelaiswagen und andererseits zwischen dem Kabelrelaiswagen und einem elektrisch angetriebenen Nutzfahrzeug zu übertragen.

Dokument DE 10 2017 217481 A1 offenbart ein Stromversorgungssystem eines Flottenfahrzeugs entsprechend dem Stand der Technik.

Da die betreffenden Nutzfahrzeuge häufig in Fahrzeugflotten betrieben werden bzw. einen Flottenverband zur Durchführung aufeinander abgestimmter Arbeiten bilden, bedarf es im Falle einer kabelgebundenen Energieversorgung der Nutzfahrzeuge untereinander einer in entsprechender Weise koordinierten Leitungsführung. Dies gilt insbesondere für den Fall der Durchführung von Wendemanövern.

Es ist daher Aufgabe der vorliegenden Erfindung, ein Stromversorgungssystem eines Flottenfahrzeugs dahingehend anzugeben, dass dieses eine koordinierte Leitungsführung innerhalb eines Flottenverbands auch für den Fall der Durchführung eines Wendemanövers gewährleistet.

Diese Aufgabe wird durch ein Stromversorgungssystem mit den Merkmalen des Patentanspruchs 1 gelöst.

Das Stromversorgungssystem eines Flottenfahrzeugs umfasst ein kabelgebunden betreibbares Zugfahrzeug sowie ein daran angebrachtes landwirtschaftliches Heckanbaugerät mit Arbeitswerkzeugen zur Ausführung einer Bodenbearbeitungsfunktion. Dem Zugfahrzeug ist ein Basismast zur Herstellung einer Kabelverbindung mit einer Stromversorgungsschnittstelle eines vorausfahrenden Flottenfahrzeugs und dem landwirtschaftlichen Heckanbaugerät ist ein Zusatzmast mit einer weiteren Stromversorgungsschnittstelle zur Herstellung einer weiteren Kabelverbindung mit einem nachfolgenden Flottenfahrzeug zugeordnet, wobei der Zusatzmast den Arbeitswerkzeugen des landwirtschaftlichen Heckanbaugeräts in Vorwärtsfahrtrichtung des Flottenfahrzeugs gesehen nachgelagert ist. Auf diese Weise lässt sich die Kabelverbindung auf eine beliebige Anzahl weiterer Flottenfahrzeuge ausdehnen, sodass diese miteinander zu einem elektrisch betriebenen Flottenverband vernetzt werden.

Während des Bearbeitungsvorgangs bewegen sich die einzelnen Flottenfahrzeuge im Flottenverband hintereinander über ein zu bearbeitendes Feld. Erreicht das vorderste Flottenfahrzeug bzw. Leitfahrzeug das Vorgewende im Feldrandbereich, so müssen sämtliche nachfolgenden Flottenfahrzeuge ebenfalls nacheinander wenden, um in den nächsten zu bearbeitenden Feldabschnitt einzubiegen. Da jedes der auf das Leitfahrzeug folgenden Flottenfahrzeuge am nachgelagerten Zusatzmast des Vorderfahrzeugs elektrisch angebunden ist, sind Kollisionen mit den zwischen den Flottenfahrzeugen verlaufenden Kabelverbindungen während der Durchführung des Wendemanövers ausgeschlossen. Auf diese Weise ist stets eine koordinierte Leitungsführung gewährleistet.

Das Leitfahrzeug ist hierbei mit Mitteln zur Herstellung einer Stromversorgungsverbindung mit einer stationären Energieversorgungseinrichtung, die sich beispielsweise in Gestalt einer Umspannstation am Rande des zu bearbeitenden Feldbereichs befindet, ausgerüstet. Bei den Mitteln zur Herstellung der Stromversorgungsverbindung handelt es sich zum Beispiel um eine Kabeltrommel mit einem aktiv gesteuerten Kabelführungsarm, wie sie aus der DE 10 2018 212 150 A1 bekannt ist.

Typischerweise sind die Flottenfahrzeuge als elektrisch betriebene Traktoren mit heckseitig angebrachten landwirtschaftlichen Anbaugeräten ausgebildet. Die landwirtschaftlichen Heckanbaugeräte können von beliebigem Typ sein und der Ausführung diverser Bodenbearbeitungsfunktionen dienen. So kann es sich um ein bodeneingreifendes landwirtschaftliches Heckanbaugerät in Form eines Pflugs, eines Grubbers, einer Reihensäeinheit oder dergleichen handeln, dieses kann aber auch als Düngerstreuer, Spritzgestänge, Transportanhänger, Heuladewagen oder Güllefass ausgebildet sein.

Der Basis- bzw. Zusatzmast weist insbesondere die Gestalt einer in Richtung einer Hochachse des Zugfahrzeugs bzw. des landwirtschaftlichen Heckanbaugeräts verlaufenden Haltestruktur auf. Die Haltestruktur besteht beispielweise aus Stahl, einer hochfesten Aluminiumlegierung und/oder faserverstärktem Kunststoff.

Vorteilhafte Weiterbildungen des erfindungsgemäßen Stromversorgungsystems gehen aus den Unteransprüchen hervor.

Typischerweise befindet sich in einem oberen Endbereich des Basismasts eine drehbare Wickeltrommel zur Lagerung eines Trägerseils, wobei das Trägerseil der Führung eines an der Stromversorgungsschnittstelle des vorausfahrenden Flottenfahrzeugs anschließbaren Energie- und/oder Datenübertragungskabels dient. Das Trägerseil lässt sich hierbei lösbar im oberen Endbereich des Zusatzmasts am vorausfahrenden Flottenfahrzeug mittels einer lösbaren Kupplungseinrichtung anbringen. Auf diese Weise lässt sich gewährleisten, dass das Energie- und/oder Datenübertragungskabel in sicherem Abstand gegenüber Erdboden verläuft.

Die dem Basismast zugeordnete Wickeltrommel kann insbesondere einen Trommelkörper zur Aufnahme des Trägerseils aufweisen, wobei sich der Trommelkörper durch Ansteuerung eines motorischen Antriebs zum Auf- und Abspulen des Trägerseils in Drehung versetzen lässt. Der motorische Antrieb ist typischerweise als elektrischer Getriebemotor ausgebildet. Eine mit dem elektrischen Getriebemotor zusammenwirkende Einrichtung zur Drehmomentsteuerung ermöglicht die Einhaltung einer vorgegebenen Seilzugspannung, sodass ein übermäßiges Durchhängen des Trägerseils zwischen den Masten der Flottenfahrzeuge vermieden werden kann. Bezüglich der weiteren Einzelheiten sei auf das in DE 10 2017 217 481 A1 beschriebene Stromversorgungssystem hingewiesen. Das Trägerseil besteht in der Regel aus einer Vielzahl von Metalldrähten und/oder hochfesten Kunststofffasern.

Des Weiteren ist es denkbar, dass das landwirtschaftliche Heckanbaugerät eine zwischen einer abgesenkten Transportposition und einer angehobenen Arbeitsposition verstellbare Hilfsachse mit wenigstens einem Stützrad aufweist, wobei der Zusatzmast derart mit einem Verstellmechanismus der Hilfsachse bewegungsgekoppelt ist, dass dieser mitsamt der Hilfsachse abgesenkt bzw. angehoben wird. Dies lässt in der Arbeitsposition einen größeren Seildurchhang zu, was während der Feldbearbeitung die Zugkraft im Trägerseil verringert und damit die Belastung der Masten bzw. der von diesen umfassten Haltstrukturen. In der Transportposition hingegen führt die Absenkung des Zusatzmasts zu einer entsprechenden Verringerung der Gesamthöhe des Flottenfahrzeugs im Bereich des landwirtschaftlichen Heckanbaugeräts, was beim Transport auf einem Tieflader oder beim Befahren von Straßen im Hinblick auf mögliche Höhenbegrenzungen entlang des Transportwegs von Vorteil ist. Letztere können sich beispielsweise aufgrund von Brücken, Tunnels, Oberlandleitungen oder dergleichen ergeben.

Vorzugsweise ist der Verstellmechanismus in Gestalt einer Parallelogrammführung derart ausgebildet, dass der Zusatzmast beim Absenken bzw. Anheben der Hilfsachse seine räumliche Orientierung beibehält. Mit anderen Worten erfolgt ein Parallelversatz des Zusatzmasts, sodass beim Anheben der Hilfsachse in die Arbeitsposition zugleich eine definierte Seilzugspannung in einem daran angebrachten Trägerseil aufgebaut wird.

Daneben besteht die Möglichkeit, dass an dem Zusatzmast eine Führungsanordnung vorgesehen ist, die ein an dem Zusatzmast anbringbares Trägerseil in einem vorgegebenen Abstand gegenüber baulichen Strukturen des Flottenfahrzeugs hält. Bei der Führungsanordnung kann es sich um eine im oberen Endbereich des Zusatzmasts angeordnete Schleppkette handeln, an deren freien Ende sich das Trägerseil mittels der lösbaren Kupplungseinrichtung anbringen lässt. Die Glieder bzw. Gelenke der Schleppkette sind derart ausgelegt, dass lediglich eine Verschwenkung in einer gegenüber dem Zusatzmast senkrecht verlaufenden Horizontalebene möglich ist, wobei ein bestimmter Mindestbiegeradius nicht unterschritten wird, der derart bemessen ist, dass das Trägerseil sicher bzw. kollisionsfrei um die baulichen Strukturen des Flottenfahrzeugs herumgelenkt wird.

Anstelle einer Schleppkette ist hierzu auch die Verwendung von Umlenkrollen oder dergleichen vorstellbar.

Das erfindungsgemäße Stromversorgungssystem wird im Folgenden anhand der beigefügten Zeichnungen näher erläutert. Dabei sind hinsichtlich ihrer Funktion übereinstimmende bzw. vergleichbare Komponenten mit denselben Bezugszeichen gekennzeichnet. Es zeigen:
- Fig. 1: eine mit einer beispielhaften Ausführungsform des erfindungsgemäßen Stromversorgungssystems ausgestattete Fahrzeugflotte,
- Fig. 2: eine Aufsicht auf die Fahrzeugflotte für den Fall der Durchführung eines Wendemanövers,
- Fig. 3: ein Flottenfahrzeug, umfassend ein landwirtschaftliches Heckanbaugerät mit einer in einer angehobenen Arbeitsposition befindlichen Hilfsachse, und
- Fig. 4: das in Fig. 3 wiedergegebene landwirtschaftliche Heckanbaugerät, bei dem die Hilfsachse in eine abgesenkte Transportposition verbracht ist.

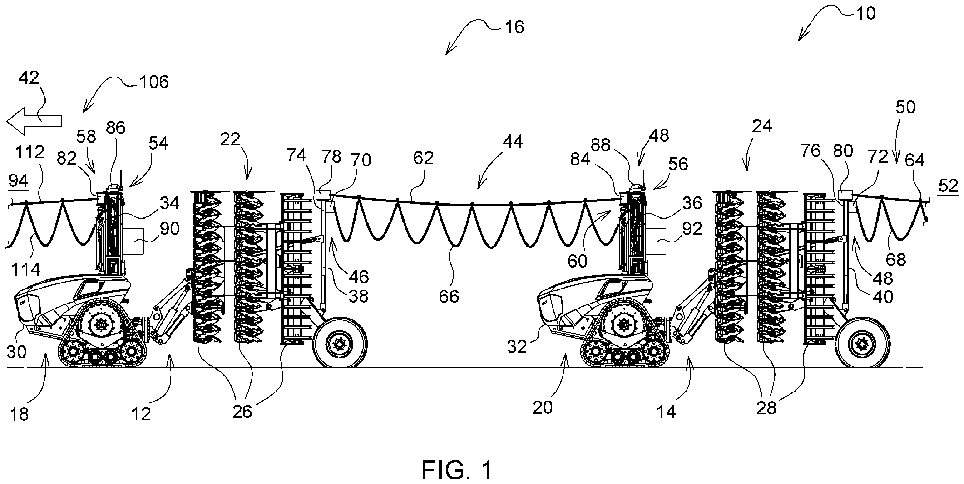

Fig. 1 zeigt eine mit einer beispielhaften Ausführungsform des erfindungsgemäßen Stromversorgungssystems ausgestattete Fahrzeugflotte.

Der Übersichtlichkeit halber ist in Fig. 1 von der Fahrzeugflotte 10 lediglich ein vorausfahrendes erstes Flottenfahrzeug 12 und ein nachfolgendes zweites Flottenfahrzeug 14 dargestellt, tatsächlich lässt sich das Stromversorgungssystem 16 aber auf eine beliebige Anzahl weiterer vorausfahrender bzw. nachfolgender Flottenfahrzeuge ausdehnen, wobei diese miteinander zu einem elektrisch betriebenen Flottenverband vernetzt sind.

Jedes der Flottenfahrzeuge 12, 14 umfasst ein kabelgebunden betreibbares Zugfahrzeug 18, 20 sowie ein daran angebrachtes landwirtschaftliches Heckanbaugerät 22, 24 mit Arbeitswerkzeugen 26, 28 zur Ausführung einer zugehörigen Bodenbearbeitungsfunktion. Im vorliegenden Fall sind die Flottenfahrzeuge 12, 14 als autonom fahrende landwirtschaftliche Traktoren 30, 32 ausgebildet, an denen heckseitig ein Grubber mit einer nachfolgenden Reihensäeinheit angebracht ist.

Des Weiteren ist dem Zugfahrzeug 18, 20 ein Basismast 34, 36 und dem landwirtschaftlichen Heckanbaugerät 22, 24 ein Zusatzmast 38, 40 zugeordnet. Der Zusatzmast 38, 40 ist jeweils den Arbeitswerkzeugen 26, 28 des landwirtschaftlichen Heckanbaugeräts 22, 24 in Vorwärtsfahrtrichtung 42 des Flottenfahrzeugs 12, 14 gesehen nachgelagert. Über den Basismast 36 des zweiten Flottenfahrzeugs 14 ist eine Kabelverbindung 44 mit einer an dem Zusatzmast 38 des ersten Flottenfahrzeugs 12 angeordneten Stromversorgungsschnittstelle 46 hergestellt.

Wie ebenfalls in Fig. 1 zu erkennen ist, ist an dem Zusatzmast 40 des zweiten Flottenfahrzeugs 14 eine weitere Stromversorgungsschnittstelle 48 angeordnet. Diese dient der Herstellung einer weiteren Kabelverbindung 50 mit einem nicht dargestellten dritten Flottenfahrzeug 52, das dem zweiten Flottenfahrzeug 14 nachfolgt.

Der Basismast 34, 36 bzw. der Zusatzmast 38, 40 weist die Gestalt einer in Richtung einer Hochachse des Zugfahrzeugs 18, 20 bzw. des landwirtschaftlichen Heckanbaugeräts 22, 24 verlaufenden Haltestruktur auf. Die Haltestruktur besteht beispielsweise aus Stahl, einer hochfesten Aluminiumlegierung und/oder faserverstärktem Kunststoff.

In einem oberen Endbereich 54, 56 des Basismasts 34, 36 befindet sich eine drehbare Wickeltrommel 58, 60 zur Lagerung eines Trägerseils 62, 64, wobei das Trägerseil 62, 64 der Führung eines an der Stromversorgungsschnittstelle 46, 48 des Flottenfahrzeugs 12, 14 anschließbaren Energie- und/oder Datenübertragungskabels 66, 68 dient. Bei der Stromversorgungsschnittstelle 46, 48 handelt es sich um eine elektrische Steckvorrichtung 70, 72, wohingegen sich das Trägerseil 62, 64 in einem oberen Endbereich 74, 76 des Zusatzmasts 38, 40 mittels einer lösbaren Kupplungseinrichtung 78, 80 anbringen lässt.

Die dem Basismast 34, 36 zugeordnete Wickeltrommel 58, 60 weist einen Trommelkörper 82, 84 zur Aufnahme des Trägerseils 62, 64 auf. Der Trommelkörper 82, 84 lässt sich durch Ansteuerung eines als elektrischer Getriebemotor 86, 88 ausgebildeten motorischen Antriebs zum Auf- und Abspulen des Trägerseils 62, 64 in Drehung versetzen. Eine mit dem elektrischen Getriebemotor 86, 88 zusammenwirkende Einrichtung 90, 92 zur Drehmomentsteuerung ermöglicht die Einhaltung einer vorgegebenen Seilzugspannung, sodass ein übermäßiges Durchhängen des Trägerseils 62, 64 zwischen den Masten 34, 36, 38, 40 der Flottenfahrzeuge 12, 14 vermieden werden kann. Bezüglich der weiteren Einzelheiten sei auf das in DE 10 2017 217 481 A1 beschriebene Stromversorgungssystem hingewiesen. Das Trägerseil 62, 64 besteht aus einer Vielzahl von Metalldrähten und/oder hochfesten Kunststofffasern.

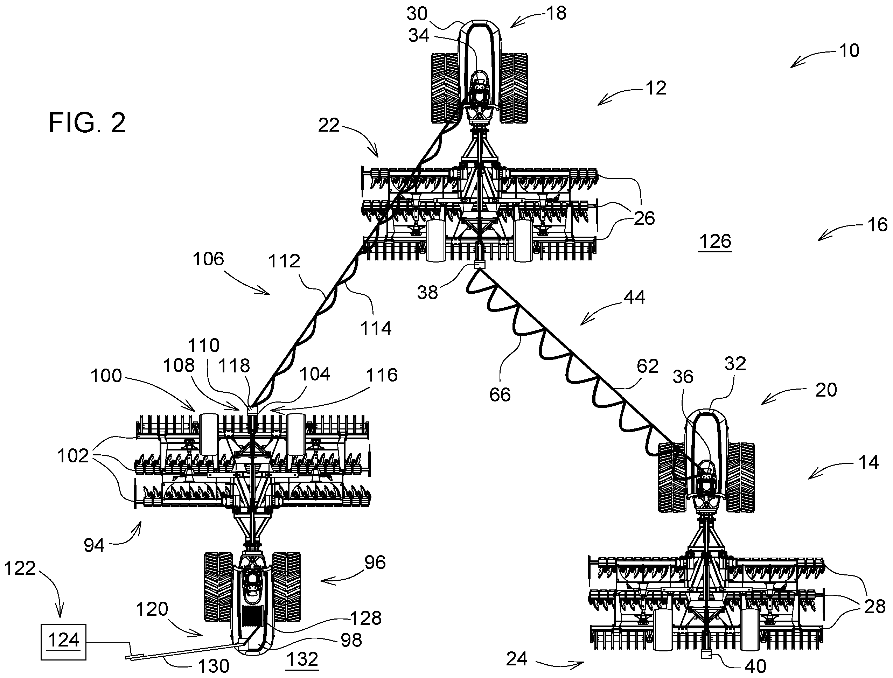

Fig. 2 zeigt eine Aufsicht auf die Fahrzeugflotte 10 für den Fall der Durchführung eines Wendemanövers, wobei neben den beiden Flottenfahrzeugen 12, 14 zusätzlich ein die Fahrzeugflotte 10 anführendes Leitfahrzeug 94 abgebildet ist. Das Leitfahrzeug 94 weist einen mit den nachfolgenden Flottenfahrzeugen 12, 14 vergleichbaren Aufbau mit einem kabelgebunden betreibbaren Zugfahrzeug 96 in Gestalt eines autonom fahrenden landwirtschaftlichen Traktors 98 sowie einem daran angebrachten landwirtschaftlichen Heckanbaugerät 100 mit Arbeitswerkzeugen 102 zur Ausführung einer zugehörigen Bodenbearbeitungsfunktion auf. Letzteres ist auch hier durch einen Grubber mit einer nachfolgenden Reihensäeinheit beispielhaft veranschaulicht.

An dem landwirtschaftlichen Heckanbaugerät 100 des Leitfahrzeugs 94 ist ein mit den nachfolgenden Flottenfahrzeugen 12, 14 korrespondierender Zusatzmast 104 zur Herstellung einer entsprechenden Kabelverbindung 106 angebracht, wozu der Zusatzmast 104 ebenfalls eine Stromversorgungsschnittstelle 108 in Gestalt einer elektrischen Steckvorrichtung 110 aufweist, an der ein vom Basismast 34 des ersten Flottenfahrzeugs 12 ausgehendes und mittels eines zugehörigen Trägerseils 112 geführtes Energie- und/oder Datenübertragungskabel 114 angeschlossen ist. Das Trägerseil 112 ist in einem oberen Endbereich 116 des Zusatzmasts 104 mittels einer lösbaren Kupplungseinrichtung 118 angebracht.

Anstelle eines Basismasts sind an dem Leitfahrzeug 94 Mittel zur Herstellung einer Stromversorgungsverbindung 120 mit einer stationären Energieversorgungseinrichtung 122 vorgesehen, die sich in Gestalt einer Umspannstation 124 am Rande des zu bearbeitenden Felds 126 befindet. Bei den Mitteln zur Herstellung der Stromversorgungsverbindung 120 handelt es sich um eine Kabeltrommel 128 mit einem aktiv gesteuerten Kabelführungsarm 130, wie sie aus der DE 10 2018 212 150 A1 bekannt ist.

Während des Bearbeitungsvorgangs bewegen sich die einzelnen Flottenfahrzeuge 12, 14 gemeinsam mit dem Leitfahrzeug 94 im Flottenverband hintereinander über das zu bearbeitende Feld 126. Erreicht das vorderste Flottenfahrzeug bzw. Leitfahrzeug 94 das Vorgewende im Feldrandbereich 132, so müssen sämtliche nachfolgenden Flottenfahrzeuge 12, 14 ebenfalls nacheinander wenden, um in den nächsten zu bearbeitenden Feldabschnitt einzubiegen. Da jedes der auf das Leitfahrzeug 94 folgenden Flottenfahrzeuge 12, 14 am nachgelagerten Zusatzmast 38, 40, 104 des Vorderfahrzeugs elektrisch angebunden ist, sind Kollisionen mit den zwischen den Flottenfahrzeugen 12, 14 einschließlich des Leitfahrzeugs 94 verlaufenden Kabelverbindungen 44, 50 während der Durchführung des Wendemanövers ausgeschlossen. Auf diese Weise ist stets eine koordinierte Leitungsführung gewährleistet.

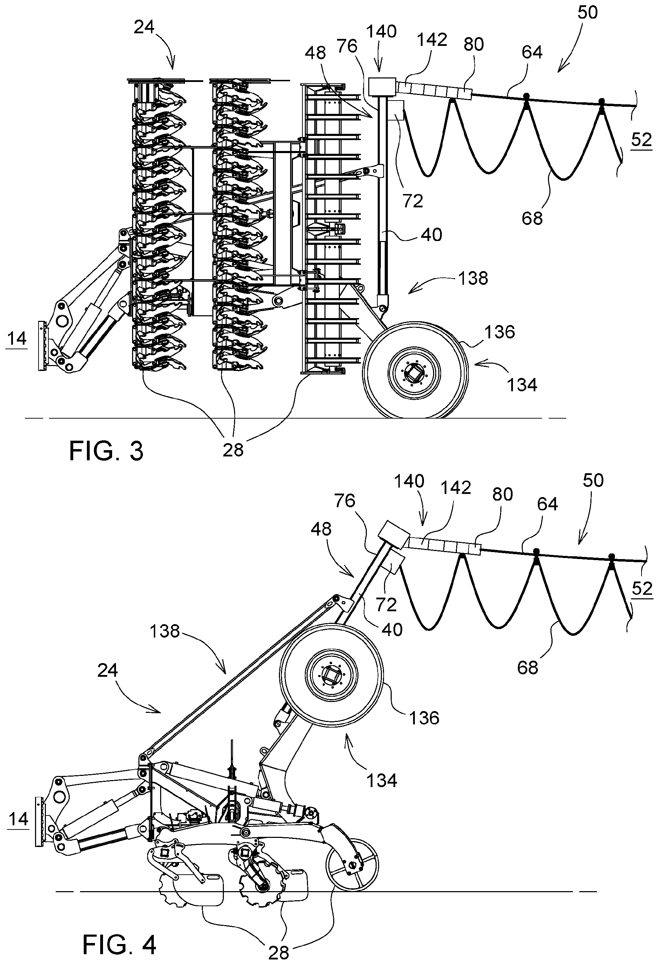

Fig. 3 bzw. 4 zeigt ein einzelnes der Flottenfahrzeuge 12, 14, stellvertretend das erste Flottenfahrzeug 12. Das zugehörige landwirtschaftliche Heckanbaugerät 22 weist eine zwischen einer abgesenkten Transportposition (siehe Fig. 3) und einer angehobenen Arbeitsposition (siehe Fig. 4) verstellbare Hilfsachse 134 mit wenigstens einem Stützrad 136 auf, wobei der Zusatzmast 38 derart mit einem Verstellmechanismus 138 der Hilfsachse 134 bewegungsgekoppelt ist, dass dieser mitsamt der Hilfsachse 134 abgesenkt bzw. angehoben wird. Dies lässt in der Arbeitsposition einen größeren Seildurchhang zu, was während der Feldbearbeitung die Zugkraft im Trägerseil 62 verringert und damit die Belastung der Masten bzw. der von diesen umfassten Haltestrukturen. In der Transportstellung hingegen führt die Absenkung des Zusatzmasts 38 zu einer entsprechenden Verringerung der Gesamthöhe des Flottenfahrzeugs 12 im Bereich des landwirtschaftlichen Heckanbaugeräts 22, was beim Transport auf einem Tieflader oder beim Befahren von Straßen im Hinblick auf mögliche Höhenbegrenzungen entlang des Transportwegs von Vorteil ist. Letztere können sich beispielsweise aufgrund von Brücken, Tunnels, Oberlandleitungen oder dergleichen ergeben.

Der Verstellmechanismus 138 ist in Gestalt einer Parallelogrammführung ausgebildet, sodass der Zusatzmast 38 beim Absenken bzw. Anheben der Hilfsachse 134 seine räumliche Orientierung beibehält.

Des Weiteren ist an dem Zusatzmast 38 eine Führungsanordnung 140 vorgesehen, die das an dem Zusatzmast 38 angebrachte Trägerseil 62 in einem vorgegebenen Abstand gegenüber baulichen Strukturen des Flottenfahrzeugs 12, insbesondere des landwirtschaftlichen Heckanbaugeräts 22 hält. Bei der Führungsanordnung 140 handelt es sich um eine im oberen Endbereich 74 des Zusatzmasts 38 angeordnete Schleppkette 142, an deren freien Ende das Trägerseil 62 mittels der lösbaren Kupplungseinrichtung 78 angebracht ist. Die Glieder bzw. Gelenke der Schleppkette 142 sind derart ausgelegt, dass lediglich eine Verschwenkung in einer gegenüber dem Zusatzmast 38 senkrecht verlaufenden Horizontalebene möglich ist, wobei ein bestimmter Mindestradius nicht unterschritten wird, der derart bemessen ist, dass das Trägerseil 62 sicher bzw. kollisionsfrei um die baulichen Strukturen des Flottenfahrzeugs 12 herumgelenkt wird.

## Patentansprüche

1. Stromversorgungssystem eines Flottenfahrzeugs (14), umfassend ein kabelgebunden betreibbares Zugfahrzeug (20) sowie ein daran angebrachtes landwirtschaftliches Heckanbaugerät (24) mit Arbeitswerkzeugen (28) zur Ausführung einer Bodenbearbeitungsfunktion, **dadurch gekennzeichnet, dass** dem Zugfahrzeug (20) ein Basismast (36) zur Herstellung einer Kabelverbindung (44) mit einer Stromversorgungsschnittstelle (46) eines vorausfahrenden Flottenfahrzeugs (12) und dem landwirtschaftlichen Heckanbaugerät (24) ein Zusatzmast (40) mit einer weiteren Stromversorgungsschnittstelle (48) zur Herstellung einer weiteren Kabelverbindung (50) mit einem nachfolgenden Flottenfahrzeug (52) zugeordnet ist, wobei der Zusatzmast (40) den Arbeitswerkzeugen (28) des landwirtschaftlichen Heckanbaugeräts (24) in Vorwärtsfahrtrichtung (42) des Flottenfahrzeugs (14) gesehen nachgelagert ist.

2. Stromversorgungssystem nach Anspruch 1, **dadurch gekennzeichnet, dass** sich in einem oberen Endbereich (56) des Basismasts (36) eine drehbare Wickeltrommel (60) zur Lagerung eines Trägerseils (62) befindet, wobei das Trägerseil (62) der Führung eines an der Stromversorgungsschnittstelle (46) des vorausfahrenden Flottenfahrzeugs (12) anschließbaren Energie- und/oder Datenübertragungskabels (66) dient.

3. Stromversorgungssystem nach Anspruch 2, **dadurch gekennzeichnet, dass** die Wickeltrommel (60) einen Trommelkörper (84) zur Aufnahme des Trägerseils (62) aufweist, wobei sich der Trommelkörper (84) durch Ansteuerung eines motorischen Antriebs (88) zum Auf- und Abspulen des Trägerseils (62) in Drehung versetzen lässt.

4. Stromversorgungssystem nach wenigstens einem der Ansprüche 1 bis 3, **dadurch gekennzeichnet, dass** das landwirtschaftliche Heckanbaugerät (24) eine zwischen einer abgesenkten Transportposition und einer angehobenen Arbeitsposition verstellbare Hilfsachse (134) mit wenigstens einem Stützrad (136) aufweist, wobei der Zusatzmast (40) derart mit einem Verstellmechanismus (138) der Hilfsachse (134) bewegungsgekoppelt ist, dass dieser mitsamt der Hilfsachse (134) abgesenkt bzw. angehoben wird.

5. Stromversorgungssystem nach Anspruch 4, **dadurch gekennzeichnet, dass** der Verstellmechanismus (138) in Gestalt einer Parallelogrammführung derart ausgebildet ist, dass der Zusatzmast (40) beim Absenken bzw. Anheben der Hilfsachse (134) seine räumliche Orientierung beibehält.

6. Stromversorgungssystem nach wenigstens einem der Ansprüche 1 bis 5, **dadurch gekennzeichnet, dass** an dem Zusatzmast (40) eine Führungsanordnung (140) vorgesehen ist, die ein an dem Zusatzmast (40) anbringbares Trägerseil (64) in einem vorgegebenen Abstand gegenüber baulichen Strukturen des Flottenfahrzeugs (14) hält.

7. Fahrzeugflotte (10) mit einer Vielzahl von mittels eines Stromversorgungssystems (16) nach wenigstens einem der Ansprüche 1 bis 6 vernetzten Flottenfahrzeugen (12, 14, 52, 94).

## Claims

1. Current supply system of a team vehicle (14), comprising a towing vehicle (20) that may be operated in a cable-interconnected manner and also an agricultural rear-mounted device (24) that is attached to said towing vehicle, said agricultural rear-mounted device having working equipment (28) for performing a ground processing function, **characterized in that** a base mast (36) is allocated to the towing vehicle (20) so as to produce a cable connection (44) to a current supply interface (46) of a team vehicle (12) that is travelling ahead, and an additional mast (40) having a further current supply interface (48) is allocated to the agricultural rear-mounted device (24) so as to produce a further cable connection (50) to a team vehicle (52) that is following, wherein the additional mast (40) is downstream of the working equipment (28) of the agricultural rear-mounted device (24) when viewed in the forwards direction of travel (42) of the team vehicle (14) .

2. Current supply system according to Claim 1, **characterized in that** a rotatable winding drum (60) is located in an upper end region (56) of the base mast (36) so as to mount a carrier wire (62), wherein the carrier wire (62) is used to guide an energy transmission cable and/or data transmission cable (66) that may be connected to the current supply interface (46) of the team vehicle (12) that is travelling ahead.

3. Current supply system according to Claim 2, **characterized in that** the winding drum (60) comprises a drum body (84) for receiving the carrier wire (62), wherein the drum body (84) may be set into rotation by means of actuating a motorized drive (88) so as to reel in or reel out the carrier wire (62).

4. Current supply system according to at least any one of Claims 1 to 3, **characterized in that** the agricultural rear-mounted device (24) comprises an auxiliary axle (134) that may be adjusted between a lowered transporting position and a raised working position, said auxiliary axle having at least one supporting wheel (136), wherein the additional mast (40) is coupled in terms of motion to an adjusting mechanism (138) of the auxiliary axle (134) in such a manner that said additional mast is lowered or raised together with the auxiliary axle (134) .

5. Current supply system according to Claim 4, **characterized in that** the adjusting mechanism (138) is embodied in the form of a parallelogram guidance arrangement in such a manner that the additional mast (40) maintains its spatial orientation when the auxiliary axle (134) is lowered or raised.

6. Current supply system according to at least any one of Claims 1 to 5, **characterized in that** a guiding arrangement (140) is provided on the additional mast (40), said guiding arrangement holding a carrier wire (64), which may be attached to the additional mast (40), at a predetermined spacing with respect to constructive structures of the team vehicle (14).

7. Team of vehicles (10) having a plurality of team vehicles (12, 14, 52, 94) that are networked by means of a current supply system (16) according to at least any one of Claims 1 to 6.

## Revendications

1. Système d'alimentation électrique d'un véhicule de flotte (14), comprenant un véhicule tracteur (20) pouvant être commandé de manière câblée, ainsi qu'un outil agricole porté arrière (24) installé sur celui-ci, avec des outils de travail (28) pour exécuter une fonction de travail du sol,
**caractérisé en ce qu'**un mât de base (36) pour établir une liaison câblée (44) avec une interface d'alimentation électrique (46) d'un véhicule de flotte qui précède (12) est associé au véhicule tracteur (20), et un mât auxiliaire (40) pourvu d'une autre interface d'alimentation électrique (48) pour établir une autre liaison câblée (50) avec un véhicule de flotte qui suit (52) est associé à l'outil agricole porté arrière (24), dans lequel le mât auxiliaire (40) est placé en aval des outils de travail (28) de l'outil agricole porté arrière (24), vu dans le sens de la marche avant (42) du véhicule de flotte (14).

2. Système d'alimentation électrique selon la revendication 1, **caractérisé en ce que** dans une zone d'extrémité supérieure (56) du mât de base (36) se trouve une poulie d'enroulement rotative (60) pour loger un câble porteur (62), le câble porteur (62) servant à guider un câble de transmission d'énergie et/ou de données (66) pouvant être connecté à l'interface d'alimentation électrique (46) du véhicule de flotte qui précède (12).

3. Système d'alimentation électrique selon la revendication 2, **caractérisé en ce que** la poulie d'enroulement (60) présente un corps de poulie (84) pour recevoir le câble porteur (62), le corps de poulie (84) pouvant être mis en rotation par le pilotage d'un entraînement motorisé (88) pour enrouler et dérouler le câble porteur (62).

4. Système d'alimentation électrique selon au moins l'une des revendications 1 à 3, **caractérisé en ce que** l'outil agricole porté arrière (24) présente un essieu auxiliaire (134) réglable entre une position de transport abaissée et une position de travail relevée et pourvu d'au moins une roue d'appui (136), le mât auxiliaire (40) étant couplé en mouvement avec un mécanisme de réglage (138) de l'essieu auxiliaire (134) de telle sorte qu'il est abaissé ou relevé conjointement avec l'essieu auxiliaire (134).

5. Système d'alimentation électrique selon la revendication 4, **caractérisé en ce que** le mécanisme de réglage (138) sous la forme d'un guidage à parallélogramme est réalisé de telle sorte que le mât auxiliaire (40) conserve son orientation dans l'espace lorsque l'essieu auxiliaire (134) est abaissé ou relevé.

6. Système d'alimentation électrique selon au moins l'une des revendications 1 à 5, **caractérisé en ce qu'**un agencement de guidage (140) est prévu sur le mât auxiliaire (40), qui maintient un câble porteur (64) pouvant être installé sur le mât auxiliaire (40) à une distance prédéfinie par rapport aux superstructures du véhicule de flotte (14).

7. Flotte de véhicules (10) comprenant une pluralité de véhicules de flotte (12, 14, 52, 94) mis en réseau au moyen d'un système d'alimentation électrique (16) selon au moins l'une des revendications 1 à 6.
